# EUROPÄISCHE PATENTSCHRIFT

(11) **EP 1 019 554 B1**
(45) Veröffentlichungstag und Bekanntmachung des Hinweises auf die Patenterteilung: **24.04.2002**
(21) Anmeldenummer: 98944889.9
(22) Anmeldetag: 17.09.1998
(51) Int. Cl.: C22B 7/02, C22B 19/30, C22B 19/34, C21C 5/38

(54) **PYROMETALLURGISCHES VERFAHREN UND VORRICHTUNG ZUR ABTRENNUNG VON ZINK UND/ODER KADMIUM UND BLEI AUS HÜTTENWERKABFALLSTOFFEN**
PYROMETALLURGICAL METHOD AND DEVICE FOR SEPARATING ZINC AND/OR CADMIUM FROM LEAD IN METALLURGICAL RESIDUES
PROCEDE PYROMETALLURGIQUE ET DISPOSITIF POUR SEPARER DU ZINC ET/OU DU CADMIUM ET DU PLOMB DE RESIDUS METALLURGIQUES

(30) Priorität: 30.09.1997 AT 166297; 10.07.1998 AT 119598
(43) Veröffentlichungstag der Anmeldung: 19.07.2000
(73) Patentinhaber: VOEST-ALPINE STAHL Donawitz GmbH, A-8700 Leoben-Donawitz (AT)
(72) Erfinder: FORSTHUBER, Markus, A-8700 Leoben (AT); KARNER, Peter, A-8713 St. Stefan (AT); NUSSBAUMER, Gerald, A-8700 Leoben (AT)
(74) Vertreter: Wildhack, Helmut, Dr. Dipl.-Ing.
(86) Internationale Anmeldenummer: AT9800227
(87) Internationale Veröffentlichungsnummer: WO9916917

(56) Entgegenhaltungen:
- EP-A- 0 336 923
- EP-A- 0 579 591
- EP-A- 0 657 552
- WO-A-96/36743
- DE-A- 3 019 066
- DE-A- 3 536 635
- DE-A- 3 942 902
- DE-A- 4 324 343
- FR-A- 2 666 592
- JP-A- 8 295 956
- JP-A- 9 241 718
- US-A- 4 113 481
- US-A- 4 266 966
- US-A- 4 836 847
- US-A- 4 957 551
- PATENT ABSTRACTS OF JAPAN vol. 097, no. 004, 30. April 1997 & JP 08 325617 A (NIPPON STEEL CORP), 10. Dezember 1996

## Beschreibung

Die Erfindung betrifft ein Verfahren zur Abtrennung oder Abtrennung und Gewinnung von Zink(Zn) und/oder Kadmium(Cd) und Blei (Pb) aus einem mit diesen Elementen und/oder deren Verbindungen kontaminierten Nebenprodukt und/oder Abfall, welches bzw. welcher bei einer Metallerzeugung oder Metallverarbeitung entsteht, insbesondere aus Stäuben und/oder Schlämmen von Hüttenwerken zur Eisen-und Stahlerzeugung, zum Beispiel Rückstände aus Prozessen und solche, die beim Abgasaustrag von metallurgischen Gefäßen sowie bei der Abgasreinigung bzw. Filterung anfallen, wobei das Nebenprodukt und/oder der Abfall reduzierenden Bedingungen ausgesetzt sowie erhöhter Temperatur unterworfen und metallisches Zink, Kadmium oder Blei gebildet und verdampfen gelassen werden, wonach eine Reoxidation dieser Elemente und ein Abscheiden der anfallenden Stäube erfolgen, und Verwendung der Reststoffe bzw. Restmetalle in einem Metallschmelzverfahren.

Weiters bezieht sich die Erfindung auf eine Vorrichtung zur Abtrennung oder Abtrennung und Gewinnung von Zink (Zn) und/oder Kadmium (Cd) und Blei (Pb) aus einem mit diesen Elementen und/oder deren Verbindungen kontaminierten Nebenprodukt und/oder Abfall, welches bzw. welcher bei einer Metallerzeugung oder Metallverarbeitung entsteht, bei Verwendung der Reststoffe bzw. Restmetalle im wesentlichen umfassend mindestens ein metallurgisches Gefäß mit einem Abgasaustragsmittel und Abgasreiniger bzw. Filter.

Zink und Kadmium sind Metalle, die gegenüber Eisen in wässriger Lösung ein negatives Potential besitzen und deshalb zum Schutz gegen atmosphärische Korrosion von Stahl vielfach verwendet werden. Es genügen zumeist dünne Oberflächenschichten dieser Metalle, um dadurch ausgezeichnete Beständigkeit gegen Rostbefall von Stahlteilen zu erreichen. Weiters kann, weil die vor Korrosion schützenden Oberflächenschichten verformbar sind, auch ein Zwischenprodukt, zum Beispiel Draht, mit einer Zinkschicht versehen werden, wobei der meist kleinstückige Abfall, der bei einer weiteren Fertigung von Teilen entsteht, mit Zink kontaminiert ist.

Auch Schrottstücke, die in Stahlschmelzverfahren als fester Einsatz dienen, können Zink- oder Kadmiumüberzüge oder eine Farbbeschichtung, die diese oder weitere Elemente, insbesondere Blei, gegebenenfalls in Form von Verbindungen enthalten, aufweisen. Wirksame Anstriche zur Vermeidung von Rostbefall an Stahlkonstruktionsteilen enthalten oft, zum Beispiel auf Grund der vorteilhaft blättchenförmigen Struktur, Bleiverbindungen, die bei Einbringung in Schmelzprozessen Probleme durch erhöhte Bleikonzentrationen in der Metallschmelze erbringen können.

Auch im Zuge der Herstellungsschritte bzw.- stufen von Produkten in integrierten Hüttenwerken, insbesondere bei der Be- und Verarbeitung des Materials, können im Erzeugungsgang jeweils Abfälle, zum Beispiel Schlämme oder Stäube und dergleichen, anfallen, die einen erhöhten Anteil an Kontaminationsmetallen aufweisen und in der Bildungsform des Umweltschutzes wegen entweder deponiert oder unter hohen Kosten aufbereitet werden müssen.

Zink und Kadmium in metallischer Form haben Siedepunkte von 906 °C bzw. 765°C, verdampfen also weitgehend bei den hohen Temperaturen, die bei Eisen-und Stahlherstellungsverfahren zur Anwendung gelangen und die in der Schmelze verbleibenden geringen Gehalte üben zumeist keine nachteiligen Wirkungen auf die Werkstoffeigenschaften des Erzeugnisses aus.

Aus Gründen des Umweltschutzes und einer Verbesserung der Wirtschaftlichkeit der Schmelzverfahren werden in modernen Anlagen ausnahmslos die aus metallurgischen Gefäßen ausgetragenen Abgase einer Reinigung oder Filterung unterworfen und die dabei erhaltenen Rückstände zumeist als hochwertige Einsatzstoffe wieder verwendet. Werden nun Schrotteile, die mit Zink und/oder Kadmium und Blei kontaminiert sind, in den Schmelzprozeß eingeführt, so verdampfen diese Metalle bzw. deren Oxide, so daß die abgestochene Legierung nur äußerst geringe Gehalte an den Kontaminationsmetallen aufweist und deren Güte nur unwesentlich beeinträchtigt ist. Die verdampfenden Metalle werden dabei im Abgas aus dem metallurgischen Gefäß ausgetragen und zum Beispiel als Verbindung im Filterrückstand abgelagert. Werden nun der Filterrückstand sowie kontaminierte Schrotteile und dergleichen in den Schmelzprozeß wieder eingebracht, so erhöht sich die Konzentration der Verbindungen der Kontaminationsmetalle im Rückstand, der bei der Reinigung des Abgases aus dem metallurgischen Gefäß entsteht.

Verfahren zur Verwertung von zinkhältigen Hüttenstäuben sowie- schlämmen, bei welchen diese unter Beifügung von Kohlenstoffträgern agglomeriert oder pelletisiert und in Schmelzöfen eingesetzt werden, sind aus der EP-A -657552 sowie der JP-A-9241718 bekannt.

Hohe Gehalte an Zink und/oder Kadmium im Filterrückstand erbringen ein sogenanntes Konzentrat dieser Elemente, welches auch als wertvoller Rohstoff für eine Reinmetalldarstellung gelten kann. Wird jedoch zum Beispiel bei einer Sauerstoffblasstahl- Herstellung, also bei einer Metallerschmelzung, der Filterrückstand im Kreislauf geführt und steigt darin die Konzentration von Zink - und/oder Kadmiumverbindungen über einen Wert, zum 'Beispiel 20 Gew.-%, so können sich in nachteiliger Weise Ablagerungen im Zusammenwirken mit den übrigen im Abgasaustrag mitgeführten Metallen und Metall- sowie Nichtmetall-Verbindungen bilden, welche Ablagerungen gegebenenfalls hohe Härte aufweisen bzw. erreichen und umfangreiche sowie aufwendige Reinigungsarbeiten an den Filteranlagen erfordern. Es wurde beispielsweise zu einer Vermeidung oder Verminderung einer Ausbildung von Ablagerungen auch schon versucht, die Schmelztechnologie sowie die Filtertechnik zu ändern.

Ein Führen der Filterrückstände im Kreislauf bei den Metallerschmelzungsverfahren und dabei eine langsame Erhöhung der Zink - und/oder Kadmium- und Bleigehalte weist auch wirtschaftliche Nachteile auf, weil bei jedem Einsatz des jeweiligen Filterrückstandes die Kontaminationsmetalle erwärmt, reduziert und verdampft werden müssen, somit ein Energieaufwand erforderlich ist, welche Energiemenge für das Metallerschmelzungsverfahren nicht mehr zur Verfügung steht.

Hohe Konzentrationen an Zink und/oder Kadmium und Blei im Einsatz können auch höhere Gehalte dieser Elemente in erschmolzenem Metall bewirken, wodurch gegebenenfalls Nachteile bei dessen Weiterverarbeitung entstehen können. Es wurden beispielsweisse beim Stranggießen von Knüppeln schon Stahlauswürfe aus der Kokille beobachtet, deren Ursache Zinkgehalte von über 120 ppm im Flüssigmetall waren.

Die JP-A-8295956 beschreibt ein Verfahren zur Zinkrückgewinnung, wobei Hüttenstäube und reduzierendes Schlackenpulver gleichzeitig in die Flamme eines Sauerstoffbrenners eingeführt werden. Weiters wurde schon vorgeschlagen (US-A-4266966), aus Stahlwerksstäuben Pellets zu formen und diese mit einem Reduktionsmittel derart zu erhitzen, daß eine ausreichende Anzahl derselben zerspringt, wobei ein im wesentlichen zinkfreier Sinter, der in Schmelzprozessen wiedereinsetzbar ist, gebildet wird. Gemäß WO 96/36743 ist ein Verfahren zur Aufbereitung von metallhältigen Stäuben bekannt geworden, bei welchem eine Trennung von Grob-und Feinstaub erfolgt, der Metallgehalt im Feinstaub gemessen und bei Erreichen eines vorgesehenen Wertes eine Weiterverarbeitung desselben vorgesehen werden und der Grobstaub in den metallurgischen Prozeß rückgeführt wird. Zur Gewinnung von Eisen, Zink und Blei aus Rückständen von Hochofen, Konvertern und Elektroofen ist nach DE-A -30 19 066 vorgesehen, mittels einer Lanze den Staub bis zum Boden in ein Eisenbad zuzuführen und Aufkohlungsmittel und Schlackenbildner zuzusetzen. Zur Anreicherung von im Kupolofen anfallenden Stäuben und Metallpartikeln wird nach der DE-A- 39 42 902 ein wiederholtes Einbringen derselben in diesen vorgenommen.

Ausgehend vom Stand der Technik setzt sich die Erfindung zum Ziel, die Nachteile der bekannten Verfahren zur Abtrennung und Gewinnung von Zink und/oder Kadmium und Blei von kontaminierten Einsatzstoffen bei der Metallerzeugung zu beseitigen. Mit anderen Worten, es ist Aufgabe der Erfindung, ein neues und verbessertes Verfahren anzugeben, mit welchem, bei weitgehender Vermeidung von Aufwendungen für neuartige Filtereinrichtungen und deren Wartung, in wirtschaftlicher Weise ein gewünschtes Konzentrat der Kontaminationsmetalle und ein im Metallschmelzverfahren vorteilhaft einsetzbarer Reststoff aus den beim Abgasaustrag aus dem metallurgischen Gefäß mitgeführten Feststoffen erstellt werden kann.

Diese Aufgabe umfaßt auch eine Verarbeitung von gezielt ausgeschleusten Abfällen, die bei Produkterstellung in integrierten Hüttenwerken entstehen können. Weiters zielt die Erfindung auf eine Vorrichtung ab, mit welcher auf einfache und rasche Weise eine hohe Konzentration der Metallverbindungen von Zink und/oder Kadmium und Blei im Filterrückstand eingestellt werden kann.

Diese Aufgabe wird bei einem gattungsgemäßen Verfahren derart gelöst, daß in einem Verfahrensschritt zur Metalltrennung in einem Behandlungsgefäß oder insbesondere in einem Metall enthaltenden oder mit Metall beschickten metallurgischen Gefäß für Zink- und/oder Kadmiumverbindungen sowie gegebenenfalls Blei reduzierende Bedingungen geschaffen, eingestellt oder genutzt werden und der Abfall, insbesondere der Staub und/oder der entwässerte Schlamm in das Gefäß eingesetzt und auf mindestens 700°C, vorzugsweise mindestens 900 °C, erwärmt wird und die im Einsatz enthaltenen Metallverbindungen zumindest teilweise metallisiert, die Metalle Zink und/oder Kadmium sowie Bleilegierungen mit diesen Metallen mit hohem Dampfdruck bzw. niedrigem Siedepunkt verdampfen gelassen, gegebenenfalls mit anderen Stäuben und/oder Abgasen als metallische und/oder reoxidierte Stäube aus dem Gefäß ausgetragen, vollständig reoxidiert und in Abscheidemitteln niedergeschlagen und/oder durch diese ausgefiltert werden und ein Konzentrat gebildet wird, wonach in einem Verfahrensschritt zur Metallgewinnung das/die im Gefäß verbliebene(n), im wesentlichen zink- und kadmiumfreie(n) Restmetall(e) oder dergleichen Verbindungen als metallbildende und/oder schlackenbildende Komponenten in diesem metallurgischen Gefäß in einem Metallerschmelzungsverfahren genutzt werden, wobei dieses Verfahren zumindest zeitweise bei oxidierenden Bedingungen geführt wird, und daß für den bei der Metalltrennung anfallenden Staub und denjenigen, der bei der Metallerschmelzung entsteht, getrennte Abscheidemittel eingesetzt werden.

Das weitere Ziel der Erfindung wird bei einer gattungsgemäßen Einrichtung gelöst, indem im metallurgischen Gefäß die Verfahrensschritte Metalltrennung und Metallgewinnung ausführbar und beim Einsatz und bei einer Erwärmung von zink-und kadmium- und bleihältigem Abfall, insbesondere von Filterstäuben und/oder entwässerten Schlämmen, auf eine Temperatur von über 700 °C, vorzugsweise über 900°C, reduzierende Bedingungen einstellbar oder nutzbar sind und daß das Abgasaustragsmittel und der Abgasreiniger derart ausgeführt sind, daß die bei der Metalltrennung und Metallgewinnung anfallenden Stäube Abgasbzw. Filterrückstände, aus dem metallurgischen Gefäß in Abhängigkeit von den Verfahrensschritten zur Metalltrennung und denjenigen zur Metallgewinnung jeweils getrennt abscheidbar und ausbringbar sind, wobei getrennte Abscheide - und Weiterleitungsmittel eingesetzt werden.

Die mit der Erfindung erzielten verfahrenstechnischen Vorteile sind im wesentlichen darin zu sehen, daß die Verfahrensschritte Metalltrennung und Metallerschmelzung getrennt sind und daß während der Metalltrennung die Konzentration der Kontaminationselemente in den aus dem metallurgischen Gefäß mit dem Abgas ausgetragenen Feststoffteilchen bzw. Stäuben hoch ist. Dabei verarmen naturgemäß die Nebenprodukte bzw. der Abfall an diesen Metallen unter Bildung von im wesentlichen zink- und kadmiumfreiem Restmetall bzw. von derartigen Verbindungen, welche somit einen wertvollen, im wesentlichen kontaminationsfreien Eintrag in den Schmelzprozeß darstellen.

Für einen Fachmann auf dem Gebiet der Metallurgie war es vollkommen überraschend, daß ein kurzer Verfahrensschritt zur Metalltrennung, bei welchem für die Kontaminationsmetalle reduzierende Bedingungen geschaffen sind, anwendbar und wirkungsvoll ist, um einen weitgehend vollständigen Austrag dieser Metall aus dem Gefäß zu erreichen. Vielmehr wurde die Ansicht vertreten, daß auf Grund der Ab- bzw. Ausdampfkinetik eine Abtrennung langsam erfolgt und daß somit zur Metalltrennung längere Zeitspannen erforderlich sind, was wiederum hinsichtlich der Wirtschaftlichkeit als Nachteil zu sehen ist. Offensichtlich durch die besondere Bindungs- oder Anlagerungsform der Metalle Zink, Kadmium und Blei im Filterrückstand kann bei einer Erwärmung desselben, auch wenn dieser als Pellet vorliegt, auf über 700 °C bzw. 900 °C ein fast schlagartiges Abdampfen erfolgen, wenn entsprechend reduzierende Bedingungen vorliegen.

Der Austrag des Elementes Blei aus einem Filterrückstand bei obigen Temperaturen kann wissenschaftlich noch nicht ausreichend begründnet werden, weil der Verdampfungspunkt dieses Metalles bei einer Temperatur von 1751 °C liegt. Es ist jedoch anzunehmen, daß Blei und Zink bzw. Kadmium eine Legierung bilden, welche ihrerseits einen wesentlich erniedrigten Verdampfungspunkt besitzt, so daß beide bzw. alle Kontaminationsmetalle in ihren Dampfzustand übergeführt werden können und sozusagen Blei mitgerissen wird.

Werden nun diese aus dem Gefäß ausgetragenen Feststoffe bzw. Teilchen niedergeschlagen bzw. gesammelt oder ausgefiltert, so entsteht ein Konzentrat, welches gegebenenfalls zur wirtschaftlichen Gewinnung der Metalle Zink und/oder Kadmium, sowie Blei eine ausreichende Anreicherung besitzt. Wichtig dabei ist, daß die auf Grund des hohen Dampfdruckes verdampfenden Metalle und folglich der Metalldampf zwischen dem Entstehen und dem Ausfiltern aus dem Abgas vollständig reoxidiert wird. Dadurch kann eine Kondensation der Kontaminationsstoffe sowie eine dadurch bedingte Ansatzbildung im Austragsmittel und im Filter weitgehend verhindert werden.

Besonders günstig ist dabei, wenn der bei der Metalltrennung anfallende Staub separiert von demjenigen, der bei der Metallerschmelzung entsteht, niedergeschlagen und/oder ausgefiltert und ein Konzentrat gebildet wird.

Sollte ein Erstkonzentrat keine gewünschte Anreicherung besitzen, so ist es von Vorteil, wenn das Filterkonzentrat in der Folge bei einem Verfahrensschritt zur Metalltrennung wieder eingesetzt bzw. im Kreislauf geführt wird und die Anteile an Zink- und/oder Kadmium- und gegebenenfalls Bleiverbindungen im in der Folge anfallenden Konzentrat bis zu einer wirtschaftlichen Verwendung desselben für eine Zink-und/oder Kadmium - bzw. Bleiherstellung gesteigert werden. Werden nämlich die Filterstäube und/oder die dünnen Konzentrate beim Verfahrensschritt zur Metalltrennung eingebracht, wird ein wirtschaftlicher, zum Folgefiltrat bzw. Konzentrat hoher Anreicherungssprung der Kontaminationsmetalle erreicht.

Es kann auch, insbesondere bei Naßfiltierung eines Konverterabgases bei der Metalltrennung, günstig sein, wenn ein Teil der Zink-und/oder Kadmium - bzw. Bleiverbindungen aus dem anfallenden Konzentrat ausgetragen und das dabei entstehende Restkonzentrat bei einem folgenden Verfahrensschritt zur Metalltrennung wieder eingesetzt wird.

Ein besonders rascher Reaktionsablauf und eine solche Metallverdampfung lassen sich bevorzugt erreichen, wenn der Abfall, insbesondere der Staub und/oder entwässerte Schlamm mit reduzierendem Gas, zum Beispiel Erdgas und/oder Inertgas, zum Beispiel Argon oder Stickstoff, in eine bevorzugt reduzierend wirkende Metallschmelze durch Einblasen, insbesondere durch Einblasen mit einer Lanze oder durch bodenseitig angeordnete Düsen eingebracht wird. Damit werden in günstiger Weise im wesentlichen gleichzeitig eine Reduktion sowie eine Verdampfung und ein Austrag der Kontaminationsmetalle und ein Einbringen der Restmetalle oder dergleichen Verbindungen in die Schmelze erreicht.

Wenn zur Durchführung des Verfahrens als metallurgisches Gefäß ein Sauerstoffblaskonverter verwendet wird, kann dieses Verfahren besonders wirtschaftlich und unter Berücksichtigung sämtlicher Erfordernisse bei einer Qualitätsstahlherstellung durchgeführt werden. Weiters sind dafür auch die Voraussetzungen zum Darstellen und zur Bereitstellung hochwertiger Konzentrate für die Zink,- Kadmium- und Bleiherstellung besonders günstig.

Bei Verwendung eines derartigen Konverters hat es sich als vorteilhaft herausgestellt, wenn das kontaminierte Nebenprodukt oder ein dergleichen, insbesondere zinkhältiger und/oder kadmiumhältiger Staub und/oder entwässerter Schlamm, im Zuge des Verfahrensschrittes zur Metalltrennung mittels einer Schrottrutsche, gegebenenfalls brikettiert, vorzugsweise mit kleinstückigem Schrott und eine Roheisenschmelze in einem Sauerstoffkonverter vorzugsweise mundseitig eingebracht und gegebenenfalls durch eine in diesem angeordnete Einrichtung zur im wesentlichen bodenseitigen Gasspülung der Schmelze mit dieser vermischt und reagieren gelassen wird, wobei das bei diesem Verfahrensschritt gebildete Konverterabgas bzw. der dabei aus dem Konverter ausgetragene Staub eigens abgeschieden und ein Konzentrat gebildet wird.

Wenn, wie vorteilhaft vorgesehen sein kann, in einem Sauerstoffblasstahlkonverter Roheisen und gegebenenfalls Schrott eingesetzt und dieser in eine im wesentlich vertikale Position geschwenkt wird und wenn in einem Verfahrensschritt zur Metalltrennung bei bodenseitiger Gasspülung kontaminierte Nebenprodukte, vorzugsweise brikettierter Staub und/oder Schlamm, durch den Konvertermund in die Schmelze eingebracht und mit dieser vermischt und reagieren gelassen wird, wobei das dabei gebildete Konverterabgas bzw. der in diesem ausgetragene Staub eigens abgeschieden und ein Konzentrat gebildet wird, ist durch einfache Umschaltung des Abgaskanals auf eine eigene Filteranlage eine wirkungsvolle Konzentratbildung möglich. Es ist dabei auch ein meist dichter Anschluß der Abgasaustragseinrichtung an den Konvertermund gegeben, was auch eine Verringerung der transportierten und gefilterten Gasmenge beim Verfahrensschritt der Metalltrennung ergibt. Dieser Verfahrenschritt kann dabei auch nach bzw.bei einer Unterbrechung des Metallerschmelzungsverfahrens bzw. der Frischphase eingeschaltet werden, wodurch in vorteilhafter Weise gleichzeitig eine Badkühlung durch Stoffeinbringung und ein Austrag von Kontaminationsmetallen erfolgen.

Eine Abtrennung oder Abtrennung und Gewinnung von Zink und/oder Kadmium und Blei kann auch mit hoher Effizienz und bei Bildung hochwertiger Konzentrate erfolgen, wenn als metallurgisches Gefäß ein Elektro-Lichtbogenofen oder dergleichen Schmelzaggregat verwendet wird.

Wenn weiters eine Gewinnung eines Konzentrates von Zink-und/oder Kadmium-Verbindungen bei der Metalltrennung und eine Abscheidung von Stäuben, die beim Frischen bzw. bei der Erzeugung der Rest-bzw. Hauptmetalle anfallen, mit verschiedenen Abgasfilteranlagen durchgeführt werden, so sind besondere Betriebssicherheit der Anlagen und einfaches Rückstandsmanagement erreichbar. Weiters können für Kontaminationsmetalle besonders geeignete und zumeist wesentliche kleinere Filtereinrichtungen verwendet werden, woraus sich ein weiterer Vorteil ergibt. Der Filterrückstand vom Frischprozeß kann bei oder nach Feststellung des jeweiligen Kontaminationsgrades beim Metalltrennungs- oder Metallgewinnungs- Verfahren wiedereingesetzt werden, wobei damit die erforderlichen Energieaufwendungen des Metallschmelzverfahrens insgesamt minimierbar sind.

Reaktionskinetische Vorteile sind erreichbar, wenn bereits im Abfall bzw. im Einsatz die Voraussetzungen für eine Schaffung und Einstellung von günstigen reduzierenden Bedingungen im Behandlungsgefäß erstellt werden können und somit eine frühzeitiges und/oder gezieltes Abdampfen der Kontaminationsmetalle erreicht wird. Es wurde z.B. gefunden, daß durch entsprechende Reduktionsmittelzusätze zum pelletierten kontaminierten Filterrückstand von Konverterabgas bereits unmittelbar nach dem Einsetzen der Pellets in ein betriebsbereites metallurgisches Gefäß eine Zinkverdampfung beginnt und nach zwei bis vier Minuten zu über 80 % abgeschlossen ist, wobei im dabei ausgetragenen Gas hohe Gehalte an Zinkoxid vorlagen.

Sowohl für eine Abtrennung und Gewinnung von Kontaminationsmetallen als auch im Hinblick auf eine wirtschaftliche Verwendung der Reststoffe hat es sich als besonders vorteilhaft herausgestellt, wenn der Verfahrensschritt einer Metalltrennung und jener der Metallgewinnung in getrennten Behandlungs- und metallurgischen Gefäßen durchgeführt werden

Für eine erfindungsgemäße Vorrichtung ist es wichtig, daß verschiedene Filtereinrichtungen, die jeweils für ein bestimmtes Gasvolumen und die Art, Menge sowie Zusammensetzung und dergleichen des mitgeführten Staubes besonders geeignet sein können, bei Durchführung des Verfahrensschrittes zur Metalltrennung und zur Metallerschmelzung kurzfristig alternativ eingesetzt werden können. Dies ist besonders günstig erreichbar, wenn die Einrichtung zum Abgasaustrag mindestens ein Umschaltmittel zur Weiterleitung des Abgases an mindestens zwei Filteranlagen aufweist.

In einer anderen Ausführungsform der Erfindung kann jedoch vorteilhaft vorgesehen sein, daß das metallurgische Gefäß, insbesondere ein Sauerstoffblasstahlkonverter für die Verfahrensschritte Metalltrennung und Metallgewinnung jeweils in dafür vorgesehene unterschiedliche Positionen, insbesondere in Schwenkstellungen, festlegbar ist, wobei in jeder Position ein eigenes Abgasaustrags- bzw. Sammelmittel mit zugehöriger Filtereinrichtung wirksam anschließbar ist. Dadurch kann der Verfahrensschritt der Metalltrennung zumindest teilweise in die für ein Chargieren des metallurgischen Gefäßes erforderliche Zeitspanne eingebaut werden, wodurch eine besonders hohe Wirtschaftlichkeit erreicht werden kann.

Im folgenden wird die Erfindung anhand von lediglich einen Ausführungsweg darstellenden Zeichnung näher erläutert. Es zeigen
Fig. 1 einen Blasstahlkonverter mit getrennten Abgasaustragsmitteln
Fig. 2 einen Blasstahlkonverter mit einem Abgasaustragsmittel mit einem Umschalter für zwei Gasführungen.
Fig. 3 ein Behandlungsgefäß und einen nachgeordneten Konverter

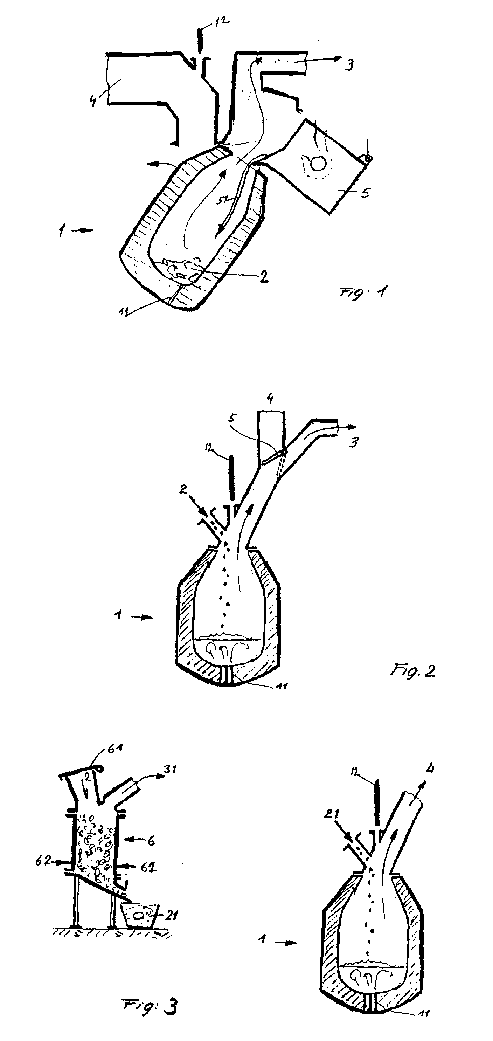

In Fig. 1 ist schematisch ein metallurgisches Gefäß 1 in einer Schwenkposition mit einem Abgasaustragsmittel 3 bzw. dergleichen Sammler dargestellt. Diese Position ist für einen Verfahrensschritt zur Metalltrennung geeignet, bei welchem vorab mittels einer Schrottrutsche oder dergleichen ein zink-und/oder kadmiumhältiger, gegebenenfalls bleihältiger Staub 2 und kleinstückiger Schritt in das Gefäß 1 eingebracht werden. Erfolgt auf Grund von thermischen Gasbewegungen dabei ein geringfügiger Austrag von Staub, wird dieser im Abgasaustragsmittel 3 einer Filtereinrichtung zugeführt. Wird nun, reduzierende Bedingungen schaffend, ein Roheisen 51 aus einer Pfanne 5 auf einen kontaminierten Einsatz 2 in staubförmigem oder brikettiertem Zustand in das Gefäß 1 eingebracht, werden Zink, Kadmium und Blei metallisiert und verdampft. Ein gebildeter Metalldampf wird aus dem metallurgischen Gefäß 1 in Pfeilrichtung ausgebracht, reoxidiert, im Abgassammelmittel 3 einer eigenen Filtereinrichtung zugeführt und ein Konzentrat gebildet. Zu einer Unterstützung einer Vermengung von Einsatz 2 mit einer einfließenden Schmelze 51 kann auch eine Gasspülung 11 eingeschaltet werden. Nach einem Einbringen von Roheisen 51 aus einer Pfanne 5 bei intensiver Mischung mit dem im Gefäß 1 befindlichen Einsatz 2 wird das Gefäß 1 in eine vertikale Position geschwenkt, wobei dessen Mündungsöffnung mit einem für eine vertikale Position wirksamen Abgassammelmittel 4 kooperiert. Durch Einstellung von oxidierenden Bedingungen, zum Beispiel mittels einer absenkbaren Sauerstofflanze 12, kann nun ein Metallerschmelzungsverfahren durchgeführt werden, wobei ein dabei gebildetes Abgas vom Austragsmittel 4 einer dafür bestimmten weiteren Filtereinrichtung 9 zuführbar ist.

Aus Fig. 2 ist schematisch ein metallurgisches Gefäß 1 mit einem Abgasaustragsmittel entnehmbar, welches durch einen Umschalter 5 jeweils alternativ mit einem Abgassammler 3 für einen Kontaminationsmetallaustrag und einem Abgassammler 4 für einen Gasaustrag bei einer Metallerschmelzung verbindbar ist. Soll beispielsweise in einer derartigen Einrichtung 1 ein brikettierter Schlamm oder Staub 2 eingesetzt werden, so erfolgt vorerst, zum Beispiel durch ein Ausfahren einer Sauerstofflanze 12 und ein Spülen mit Inertgas 11 eine Einstellung von reduzierenden Bedingungen im Gefäß 1. Im Abgasaustragsmittel wird durch einen Umschalter 5 ein Anschluß an einen Abgassammler 3 und einen Filter für Kontaminationsmetallverbindungen geschaffen, worauf vorzugsweise bei einer Weiterführung der Gasspülung 11 Zink und/oder Kadmium und gegebenenfalls bleihältige Filterrückstände 2 in das Gefäß eingebracht und reagieren gelassen werden. Im Zuge einer Metallisierung, Verdampfung und Reoxidation der Metalle werden diese aus dem metallurgischen Gefäß mittels des Abgassammlers 3 einem eigenen Filter zugeleitet und ein Konzentrat gebildet. Nach einer Beendigung der Einbringung von Abfall 2 in das metallurgische Gefäß 1 kann auf einfache Weise ein Umschalter 5 im Abgasaustragsmittel umgestellt, eine Sauerstofflanze 13 in Blasposition gebracht und eine Metallerschmelzung bei oxidierenden Bedingungen fortgesetzt werden.

In Fig. 3, linkes Titelbild ist ein Behandlungsgefäß 6 mit einem obenseitigen Eintrag 61 für mit Reduktionsmittel vermengten kompaktierten Abfall 2, welcher Kontaminationsmetall enthät, dargestellt. Mittels einer Heizeinrichtung 62 sind Reduktions- sowie Verdampfungstemperaturen der Kontaminationsmetalle im Gefäß 6 einstellbar. Abgase und Metalldämpfe werden gegebenenfalls nach deren Reoxidation durch einen Austrag 31 aus dem Gefäß 6 ausgebracht und einem Abgasreiniger zugeführt.

Bodenseitig des Gefäßes 6 können im wesentlichen kontaminationsmetallfreie Reststoffe 21 entnommen und einer Schmelzeinrichtung 1 zugeführt, beispielsweise in einem Blasstahlkonverter eingesetzt werden.

## Patentansprüche

1. Verfahren zur Abtrennung oder Abtrennung und Gewinnung von Zink (Zn) und/oder Kadmium ( Cd) und Blei (Pb) aus einem mit diesen Elementen und/oder deren Verbindungen kontaminierten Nebenprodukt und/oder Abfall, welches bzw. welcher bei einer Metallerzeugung oder Metallverarbeitung entsteht, insbesondere aus Stäuben und/oder Schlämmen von Hüttenwerken zur Eisen- und Stahlerzeugung, zum Beispiel Rückstände aus Prozessen und solche, die beim Abgasaustrag von metallurgischen Gefäßen sowie bei der Abgasreinigung bzw. Filterung anfallen, wobei das Nebenprodukt/und/oder der Abfall reduzierenden Bedingungen ausgesetzt sowie erhöhter Temperatur unterworfen und metallisches Zink, Kadmium oder Blei gebildet und verdampfen gelassen werden, wonach eine Reoxidation dieser Elemente und ein Abscheiden der anfallenden Stäube erfolgen und Verwendung der Reststoffe bzw. der Restmetalle in einem Metallschmelzverfahren, **dadurch gekennzeichnet, daß** in einem metallurgischen Gefäß, welches Metall enthält oder dem Metall zügeführt wird, in einem Verfahrensschritt zur Metalltrennung für Zink-und/oder Kadmiumverbindungen sowie gegebenenfalls Blei reduzierende Bedingungen geschaffen, eingestellt oder genutzt werden und der Abfall, insbesondere der Staub und/oder der entwässerte Schlamm in das Gefäß eingesetzt und auf mindestens 700°C, vorzugsweise mindestens 900°C, erwärmt wird und die im Einsatz enthaltenen Metallverbindungen zumindest teilweise metallisiert, die Metalle Zink und/oder Kadmium sowie Bleilegierungen mit diesen Metallen mit hohem Dampfdruck bzw. niedrigem Siedepunkt verdampfen gelassen, gegebenenfalls mit anderen Stäuben und/oder Abgasen als metallische und/oder reoxidierte Stäube aus dem Gefäß ausgetragen, vollständig reoxidiert und in Abscheidemitteln niedergeschlagen und/oder durch diese ausgefiltert werden und ein Konzentrat gebildet wird, wonach in einem Verfahrensschritt zur Metallgewinnung das/die im selben Gefäß verbliebene(n), im wesentlichen zink-und kadmiumfreie(n) Restmetall(e) oder dergleichen Verbindungen als metallbildende und/oder schlackenbildende Komponenten in diesem metallurgischen Gefäß in einem Metallerschmelzungsverfahren genutzt werden, wobei dieses zumindest zeitweise, bei oxidierenden Bedingungen geführt wird und daß für den bei der Metalltrennung anfallenden Staub und denjenigen, der bei der Metallerschmelzung entsteht, getrennte Abscheidemittel eingesetzt werden.

2. Verfahren nach Anspruch 1, **dadurch gekennzeichnet, daß** das Filterkonzentrat in der Folge bei einem Verfahrensschritt zur Metalltrennung wieder eingesetzt bzw. im Kreislauf geführt wird und die Anteile an Zink-und/oder Kadmium- und gegebenenfalls Blei- Verbindungen im anfallenden Konzentrat bis zu einer wirtschaftlichen Verwendung desselben für eine Zink-und/oder Kadmiumherstellung gesteigert werden.

3. Verfahren nach Anspruch 1 oder 2, **dadurch gekennzeichnet, daß** ein Teil der Zink-und/oder Kadmiumverbindungen aus dem anfallenden Konzentrat ausgetragen und das dabei entstehende Restkonzentrat bei einem folgenden Verfahrensschritt zur Metalltrennung wieder eingesetzt wird.

4. Verfahren nach einem der Ansprüche 1 bis 3, **dadurch gekennzeichnet, daß**, wie an sich bekannt, der Abfall, insbesondere der Staub und/oder der entwässerte Schlamm mit reduzierendem Gas, zum Beispiel Erdgas und/oder Inertgas, zum Beispiel Argon oder Stickstoff, in eine bevorzugt reduzierend wirkende Metallschmelze durch Einblasen, insbesondere durch Einblasen mit einer Lanze oder durch bodenseitig angeordnete Düsen eingebracht wird.

5. Verfahren nach einem der Ansprüche 1 bis 4, **dadurch gekennzeichnet, daß** als metallurgisches Gefäß ein Sauerstoffblasstahlkonverter verwendet wird.

6. Verfahren nach einem der Ansprüche 1 bis 5, **dadurch gekennzeichnet, daß** das kontaminierte Nebenprodukt oder ein dergleichen, insbesondere zinkhältiger und/oder kadmiumhältiger Staub und/oder entwässerter Schlamm, im Zuge des Verfahrensschrittes zur Metalltrennung mittels einer Schrottrutsche, gegebenenfalls brikettiert, vorzugsweise mit kleinstückigem Schrott und eine Roheisenschmelze in einem Sauerstoffkonverter vorzugsweise mundseitig eingebracht und gegebenenfalls durch eine in diesem angeordnete Einrichtung zur im wesentlichen bodenseitigen Gasspülung der Schmelze mit dieser vermischt und reagieren gelassen wird, wobei das bei diesem Verfahrensschritt gebildetet Konverterabgas bzw. der dabei aus dem Konverter ausgetragene Staub eigens abgeschieden und ein Konzentrat gebildet wird.

7. Verfahren nach einem der Ansprüche 1 bis 5, **dadurch gekennzeichnet, daß** in einem Sauerstoffblaskonverter Roheisen und gegebenenfalls Schrott eingesetzt und dieser in eine im wesentlichen vertikale Position geschwenkt wird und daß in einem Verfahrensschritt zur Metalltrennung bei bodenseitiger Gasspülung kontaminierte Nebenprodukte , vorzugsweise brikettierter Staub und/oder Schlamm, durch den Konvertermund in die Schmelze eingebracht, mit dieser vermischt und reagieren gelassen wird, wobei das dabei gebildete Konverterabgas bzw. der in diesem ausgetragene Staub eigens abgeschieden und ein Konzentrat gebildet wird.

8. Verfahren nach einem der Ansprüche 1 bis 7, **dadurch gekennzeichnet. daß** als metallurgisches Gefäß ein Elektro-Lichtbogenofen oder dergleichen Schmelzaggregat verwendet wird.

9. Verfahren nach einem der Ansprüche 1 bis 8, **dadurch gekennzeichnet, daß** eine Gewinnung eines Konzentrates von Zink-und/oder Kadmium-Verbindungen und Blei bei einer Metalltrennung und eine Abscheidung von Stäuben, die beim Frischen bzw. bei der Erzeugung der Rest- bzw. Hauptmetalle anfallen, mit verschiedenen Abgasfilteranlagen durchgeführt werden.

10. Verfahren nach enem der Ansprüche 1 bis 9, **dadurch gekennzeichnet, daß** der Abfall, insbesondere der Staub und/oder der entwässerte Schlamm, zur Schaffung von reduzierenden Bedingungen für eine Metalltrennung, wie an sich bekannt, mit einem Reduktionsmittel, insbesondere mit einem kohlenstoffhältigen Reduktionsmittel, vermengt, gegebenenfalls kompaktiert, zum Beispiel brikettiert oder pelletiert und in ein Behandlungsgefäß eingesetzt wird.

11. Vorrichtung zur Abtrennung oder Abtrennung und Gewinnung von Zink(Zn) und/oder Kadmium (Cd) und Blei (Pb) aus einem mit diesen Elementen und/oder deren Verbindungen kontaminierten Nebenprodukt und/oder Abfall, welches bzw. welcher bei einer Metallerzeugung oder Metallverarbeitung entsteht, bei Verwendung der Reststoffe bzw. Restmetalle, im wesentlichen umfassend mindestens ein metallurgisches Gefäß mit einem Abgasaustragsmittel und Abgasreiniger bzw. Filter, insbesondere zur Durchführung des Verfahrens nach den Ansprüchen 1 bis 12, **dadurch gekennzeichnet, daß** im metallurgischen Gefäß (1) die Verfahrensschritte Metalltrennung und Metallgewinnung ausführbar und beim Einsatz und bei der Erwärmung von zink- und kadmium-und bleihältigem Abfall, insbesondere von Filterstäuben und/oder entwässerten Schlämmen (2) auf eine Temperatur von über 700 °C, vorzugsweise über 900°C, reduzierende Bedingungen einstellbar oder nutzbar sind und daß das Abgasaustragsmittel und der Abgasreiniger derart ausgeführt sind, daß die während der Metalltrennung und der Metallgewinnung anfallenden Stäube und Gase aus dem metallurgischen Gefäß in Abhängigkeit von den Verfahrensschritten zur Metalltrennung (3) und zur Metallgwinnung (4) jeweils getrennt abscheidbar und ausbringbar sind, und daß dazu getrennte Weiterleitungs und Abscheidemittel vorgesehen sind.

12. Vorrichtung nach Anspruch 11, **dadurch gekennzeichnet, daß** die Einrichtung zum Abgasaustrag mindestens ein Umschaltmittel (5) zur Weiterleitung des Abgases an mindestens zwei Abscheideanlagen aufweist.

13. Vorrichtung nach Anspruch 11, **dadurch gekennzeichnet, daß** das metallurgische Gefäß, insbesondere ein Sauerstoffblaskonverter (1), für die Verfahrensschritte Metalltrennung und Metallgewinnung jeweils in dafür vorgesehene unterschiedliche Positionen, insbesondere Schwenkstellungen, festlegbar ist, wobei in jeder Position ein eigenes Abgasaustrags- bzw. Sammelmittel mit zugehöriger Filtereinrichtung wirksam bzw. anschließbar ist.

14. Verwendung des Verfahrens zur Abtrennung oder Abtrennung und Gewinnung von Zink und/oder Kadmium und Blei gemäß einem der Ansprüche 1 bis 10, vorzugsweise in einer Vorrichtung gemäß einem der Ansprüche 11 bis 13 für eine Verwertung oder Beseitigung von kontaminierten Abfällen und/oder Kreislaufstoffen, die durch erforderliche und/oder gezielte Ausschleusung durch getrennte Abscheidemittel bei einer Erzeugung und/oder Verarbeitung in integrierten Eisen-Hüttenwerken anfallen.

## Claims

1. Process for separating off or separating off and producing zinc (Zn) and/or cadmium (Cd) and lead (Pb) from a by-product and/or waste which is contaminated with these elements and/or compounds thereof and is formed during metal production or metal processing, in particular from dusts and/or sludges from smelting plants for iron and steel production, for example residues from processes and those which are obtained during discharge of waste gas from metallurgical vessels as well as in waste gas purification or filtration, wherein the by-product and/or the waste is exposed to reducing conditions and subjected to elevated temperature and metallic zinc, cadmium or lead are form and allowed to vaporize, after which there is a re-oxidation of these elements and a depositing of the accumulating dusts takes place, and the use of the residual substances or the residual metals in a metal smelting process, **characterized in that** reducing conditions are created, established or utilized in a metallurgical vessel, which contains metal or to which metal is fed, in a process step for metal separation for zinc and/or cadmium compounds and optionally lead, and the waste, in particular the dust and/or the dewatered sludge, is introduced into the vessel and heated to at least 700°C, preferably at least 900°C, and the metal compounds contained in the feed are at least partly metallized, the metals zinc and/or cadmium and lead alloys with these metals having a high vapour pressure or low boiling point are allowed to vaporize and are discharged from the vessel as metallic and/or re-oxidized dusts, optionally with other dusts and/or waste gases, completely re-oxidized and precipitated in separating means and/or filtered out thereby, and a concentrate is formed, after which the substantially zinc- and cadmium-free residual metal(s) or compounds of the like remaining in the same vessel are utilized as metal-forming and/or slag-forming components in this metallurgical vessel in a metal smelting process with the process being conducted at least at times under oxidizing conditions, and **in that** separate separating means are employed for the dust obtained during the metal separation and that formed during the metal smelting.

2. Process according to claim 1, **characterized in that** the filter concentrate is subsequently employed again or recycled in a process step for separation of metals and the contents of compounds of zinc and/or cadmium compounds and optionally lead compounds in the concentrate obtained are increased up to an economical use thereof for a zinc and/or cadmium production.

3. Process according to claim 1 or 2, **characterized in that** a portion of the zinc and/or cadmium compounds is discharged from the concentrate obtained and the residual concentrate thereby formed is employed again in a following process step for metal separation.

4. Process according to one of claims 1 to 3, **characterized in that**, as is known per se, the waste, in particular the dust and/or the dewatered sludge, is introduced with a reducing gas, for example natural gas and/or inert gas, for example argon or nitrogen, into a molten metal, which preferably has a reducing action, by blowing in, in particular by blowing in with a lance or through nozzles arranged on the bottom.

5. Process according to one of claims 1 to 4, **characterized in that** an oxygen steel converter is used as the metallurgical vessel.

6. Process according to one of claims 1 to 5, **characterized in that**, in the course of the process step for metal separation, the contaminated by-product or the like, in particular zinc-containing and/or cadmium-containing dust and/or dewatered sludge, optionally in briquetted form, preferably with small-pieced scrap and molten pig iron, is introduced into an oxygen converter, preferably on the mouth side, by means of a scrap chute, and optionally for gas purging of the melt substantially at the bottom, is mixed and allowed to react therewith by a device arranged therein, the converter waste gas formed in this process step or the dust thereby discharged from the converter being expressly separated out and a concentrate being formed.

7. Process according to one of claims 1 to 5, **characterized in that** pig iron and optionally scrap iron are introduced into an oxygen converter and this is tilted into a substantially vertical position, and **in that** in a process step for metal separation with gas purging at the bottom, contaminated by-products, preferably briquetted dust and/or sludge, is introduced into the melt through a converter mouth and is mixed and allowed to react therein, the converter waste gas thereby formed or the dust discharged in this being expressly separated out and a concentrate being formed.

8. Process according to one of claims 1 to 7, **characterized in that** an electric arc furnace or like smelting unit is used as the metallurgical vessel.

9. Process according to one of claims 1 to 8, **characterized in that** production of a concentrate of zinc and/or cadmium compounds and lead during metal separation, and separating out of dusts which are obtained during refining or during production of the residual or main metals are carried out with various waste gas filter units.

10. Process according to one of claims 1 to 9, **characterized in that** to create reducing conditions for a metal separation, as is known per se, the waste, in particular the dust and/or dewatered sludge, is mixed with a reducing agent, in particular with a carbon-containing reducing agent, and the mixture is optionally compacted, for example briquetted or pelletted, and employed in a treatment vessel.

11. Arrangement for separating off or separating off and recovery of zinc (Zn) and/or cadmium (Cd) and lead (Pb) from a by-product and/or waste which is contaminated with these elements and/or compounds thereof and formed during metal production or metal processing by the use of the residual substances or residual metals, substantially comprising at least one metallurgical vessel with a waste gas discharge means and waste gas purifier or filter, in particular for carrying out the process according to claims 1 to 12, **characterized in that** the process steps of metal separation and metal production can be carried out in the metallurgical vessel (1) and during introduction and heating of zinc- and cadmium- and lead-containing waste, in particular filter dusts and/or dewatered sludges (2), to a temperature of above 700°C, preferably above 900°C, reducing conditions can be established or utilized, and **in that** the waste gas discharge means and the waste gas purifier are constructed such that the dusts and gases accumulating during the metallization and the metal production can in each case be separated out and recovered separately from the metallurgical vessel as a function of the process steps for metal separation (3) and for metal production (4), and **in that** separate means of further transfer and separating out are provided for this.

12. Arrangement according to claim 11, **characterized in that** the arrangement for discharge of the waste gas has at least one changeover means (5) for further transfer of the waste gas to at least two separating units.

13. Arrangement according to claim 11, **characterized in that** for the process steps of metal separation and metal production the metallurgical vessel, in particular an oxygen converter (1), can in each case be fixed in different positions envisaged for these, in particular tilting positions, each position having its own waste gas discharge or collection means, with associated filter device, which is operative or can be connected.

14. Use of the process for separating off or separating off and producing zinc and/or cadmium and lead according to one of claims 1 to 10, preferably in an arrangement according to one of claims 11 to 13, for a utilization or elimination of contaminated waste and/or circulating substances which are obtained during production and/or processing in integrated iron smelting works by a necessary and/or controlled sluicing out by separate separating means.

## Revendications

1. Procédé de séparation ou de séparation et récupération de zinc (Zn) et/ou de cadmium (Cd) et de plomb (Pb) à partir d'un sous-produit et/ou résidu contaminé par ces éléments et/ou leurs composés et généré lors de la production ou de la transformation de métal, en particulier à partir de poussières et/ou de boues provenant d'usines sidérurgiques produisant du fer et de l'acier, par exemple des résidus de process et des résidus obtenus lors de l'extraction de gaz résiduels hors des creusets et lors du nettoyage ou de la filtration des gaz résiduels, le sous-produit et/ou le résidu étant exposé à des conditions réductrices et soumis à une température élevée, et du zinc, du cadmium ou du plomb métallique étant formé et vaporisé, après quoi ces éléments sont réoxydés et les poussières générées séparées, et procédé d'utilisation des substances résiduelles ou résidus métalliques dans un procédé de fusion métallique, **caractérisé en ce que**, lors d'une étape de procédé de séparation métallique de composés de zinc et/ou de cadmium ainsi qu'éventuellement du plomb, on crée, règle ou utilise des conditions réductrices dans un creuset contenant ou alimenté en métal, **en ce que** le déchet, en particulier la poussière et/ou la boue déshydratée, est introduit dans le creuset et chauffé à une température supérieure ou égale à 700 °C et de préférence supérieure ou égale à 900 °C, **en ce que** les composés métalliques contenus dans la charge sont au moins partiellement métallisés, **en ce que** les métaux zinc et/ou cadmium ainsi que des alliages de plomb sont vaporisés avec ces métaux à haute tension de vapeur ou à bas point de fusion, éventuellement extraits hors du creuset avec d'autres poussières et/ou gaz résiduels à l'état de poussières métalliques et/ou réoxydées, entièrement réoxydés et précipités dans des moyens de séparation et/ou extraits par filtrage par ces derniers et **en ce qu'**un concentré est formé, après quoi, dans une étape de procédé de récupération de métal, le ou les résidus métalliques ou des composés similaires sensiblement exempts de zinc et de cadmium demeurés dans le même creuset sont utilisés en tant que composants métallifères et/ou scorificatoires dans ce creuset dans un procédé de fusion métallique, ce dernier étant conduit au moins par intermittence dans des conditions réductrices, et **en ce que** l'on emploie des moyens de séparation distincts pour la poussière générée lors de la séparation des métaux et pour celle générée lors de la fusion métallique.

2. Procédé selon la revendication 1, **caractérisé en ce que** le concentré de filtration est ensuite réutilisé ou recyclé lors d'une étape de séparation des métaux et **en ce que** la teneur en composés de zinc et/ou de cadmium et éventuellement de plomb du concentré obtenu est augmentée jusqu'à permettre une utilisation économique dudit concentré pour la production de zinc et/ou de cadmium.

3. Procédé selon la revendication 1 ou 2, **caractérisé en ce qu'**une partie des composés de zinc et/ou cadmium est extraite du concentré obtenu et **en ce que** le concentré restant est réutilisé lors d'une étape suivante de séparation métallique.

4. Procédé selon l'une des revendications 1 à 3, **caractérisé en ce que**, d'une manière connue en soi, le déchet, en particulier la poussière et/ou la boue déshydratée, est introduit avec un gaz réducteur, par exemple un gaz naturel et/ou un gaz inerte, par exemple de l'argon ou de l'azote, dans un bain de fusion de préférence à effet réducteur par insufflation, en particulier insufflation avec une lance ou à travers des buses agencées côté fond.

5. Procédé selon l'une des revendications 1 à 4, **caractérisé en ce que** le creuset employé est un convertisseur à oxygène.

6. Procédé selon l'une des revendications 1 à 5, **caractérisé en ce que** le sous-produit contaminé ou une poussière et/ou une boue déshydratée similaires, en particulier contenant du zinc et/ou du cadmium, est introduit, au cours de l'étape de séparation métallique, au moyen d'une goulotte à riblons, éventuellement à l'état aggloméré en briquettes, de préférence avec des riblons en petits morceaux et une coulée de fonte brute dans un convertisseur à oxygène, de préférence côté bec, et éventuellement mélangé et laissé réagir avec la coulée au moyen d'un dispositif de circulation de gaz dans la coulée, agencé sensiblement côté fond dans ledit convertisseur, le gaz résiduel généré dans le convertisseur lors de cette étape ou la poussière alors extraite du convertisseur étant spécialement séparé(e) et un concentré étant formé.

7. Procédé selon l'une des revendications 1 à 5, **caractérisé en ce que** dans un convertisseur à oxygène, de la fonte brute et éventuellement des riblons sont introduits et ledit convertisseur est basculé en position sensiblement verticale et **en ce que**, dans une étape de séparation métallique, les sous-produits contaminés, de préférence de la poussière et/ou de la boue agglomérée en briquettes, sont introduits dans la masse en fusion par le bec du convertisseur sous circulation de gaz par le fond, mélangés et mis à réagir avec ladite masse en fusion, le gaz résiduel alors généré dans le convertisseur ou la poussière extraite de ce dernier étant séparé(e) spécialement et un concentré étant formé.

8. Procédé selon l'une des revendications 1 à 7, **caractérisé en ce que** le creuset employé est un four à arc électrique ou une unité de fusion similaire.

9. Procédé selon l'une des revendications 1 à 8, **caractérisé en ce que** la production d'un concentré de composés de zinc et/ou cadmium et de plomb lors de la séparation métallique, et la séparation de poussières générées lors de l'affinage ou de la production des métaux résiduels ou principaux, se déroulent sur différentes installations de filtration des gaz résiduels.

10. Procédé selon l'une des revendications 1 à 9, **caractérisé en ce que** le déchet, en particulier la poussière et/ou la boue déshydratée est mélangée, comme il est connu en soi, avec un réducteur, en particulier un réducteur carboné, pour créer des conditions réductrices pour une séparation métallique, éventuellement compactée, par exemple agglomérée en briquettes ou en pellets, et introduite dans un creuset de traitement.

11. Dispositif de séparation ou de séparation et récupération de zinc (Zn) et/ou de cadmium (Cd) et de plomb (Pb) à partir d'un sous-produit et/ou résidu contaminé par ces éléments et/ou leurs composés et généré lors de la production ou de la transformation de métal, utilisant des substances résiduelles ou résidus métalliques et comprenant essentiellement au moins un creuset avec un moyen d'extraction de gaz résiduels et un dispositif d'épuration de gaz résiduels ou un filtre, en particulier pour mettre en oeuvre le procédé selon les revendications 1 à 12, **caractérisé en ce que** dans le creuset (1), les étapes de séparation métallique et de production de métal sont exécutables et, lors de l'utilisation et du chauffage de déchets contenant du zinc et du cadmium et du plomb, en particulier des poussières de filtration et/ou des boues déshydratées (2), à une température supérieure à 700 °C, de préférence supérieure à 900 °C, des conditions réductrices sont réglables ou utilisables et **en ce que** le moyen d'extraction de gaz résiduels et le dispositif d'épuration de gaz résiduels sont agencés de telle sorte que les poussières et les gaz générés pendant la séparation métallique et la récupération de métal peuvent être séparés et extraits du creuset isolément en fonction des étapes de séparation métallique (3) et de récupération de métal (4), et **en ce que** des moyens séparés de transfert et de séparation sont prévus à cet effet.

12. Dispositif selon la revendication 11, **caractérisé en ce que** le dispositif d'extraction de gaz résiduels comporte au moins un moyen de commutation (5) pour transférer les gaz résiduels vers au moins deux installations de séparation.

13. Dispositif selon la revendication 11, **caractérisé en ce que** le creuset, en particulier un convertisseur à oxygène (1), peut être fixé dans différentes positions, en particulier dans différentes positions de basculement, prévues pour les étapes de séparation métallique et de production de métal, un moyen propre d'extraction ou de collecte de gaz résiduels avec dispositif de filtration associé étant opérationnel ou raccordable dans chaque position.

14. Utilisation du procédé de séparation ou de séparation et production de zinc et/ou cadmium et plomb selon l'une des revendications 1 à 10, de préférence dans un dispositif selon l'une des revendications 11 à 13 pour la valorisation ou l'élimination de produits de recyclage et/ou déchets contaminés générés lors de l'éclusage nécessaire et/ou ciblé par des moyens de séparation distincts pendant la production et/ou un traitement dans des usines de sidérurgie intégrées.
